# EUROPEAN PATENT SPECIFICATION

(11) **EP 1 368 880 B1**
(45) Date of publication and mention of the grant of the patent: **11.12.2013**
(21) Application number: 02701457.0
(22) Date of filing: 06.03.2002
(51) Int. Cl.: H02K 5/128, H02K 11/00, F04B 1/04, F04B 17/03, H02K 5/22

(54) **IMPROVEMENTS IN ELECTRIC MOTOR DRIVEN HYDRAULIC PUMPS**
VERBESSERUNGEN IN ELEKTROMOTORISCH ANGETRIEBENEN HYDRAULIKPUMPEN
AMELIORATIONS PORTANT SUR DES POMPES HYDRAULIQUES ENTRAINEES PAR DES MOTEURS ELECTRIQUES

(30) Priority: 08.03.2001 GB 0105722
(43) Date of publication of application: 10.12.2003
(73) Proprietor: Lucas Industries Limited, West Midlands B90 4LA (GB); TRW Fahrwerksysteme GmbH & Co. KG, 40547 Düsseldorf (DE)
(72) Inventor: COLES, Jeffery, Ronald, West Midlands B92 7EB (GB); KLEIST, Alexander, 40749 Düsseldorf (DE)
(74) Representative: Tranter, Andrew David
(86) International application number: PCT/GB2002/000976
(87) International publication number: WO 2002/073775

(56) References cited:
- EP-A- 0 711 019
- EP-A- 0 758 154
- DE-A- 19 922 234
- FR-A- 2 415 905
- US-A- 2 766 695
- US-A- 3 254 248
- US-A- 4 229 142
- US-A- 4 404 483
- US-A- 5 117 138
- US-A- 5 291 087

## Description

This invention relates to improvements in electric motor driven hydraulic pumps, for example of the type used in hydraulic suspension systems for vehicles.

In such pumps it is known that the hydraulic pump part of the actuator needs to be sealed hydraulically from the electrical components of the motor and any associated electronic controller. In such known pumps a barrier in the form of a sealed sealing sleeve is placed between the rotor of the motor, which runs, in operation, in hydraulic fluid, and the stator of the motor. Such a sealing sleeve contains the hydraulic fluid within an assembly defining the pump and prevents cross contamination with the electrical parts of the assembled pump actuator.

It is also known that such a sealing sleeve must withstand the hydraulic forces developed in the pump. Thus such a sleeve must be sufficiently strong to withstand such a loading.

In hydraulic suspension systems for vehicles extremely high pressures, in the order of 200 bar, can be developed by the pump and a load resulting from such high pressures must be supported by the sleeve. Conventionally such a requirement would mean increasing the thickness of the sleeve to ensure that the sleeve does not rupture or otherwise fail in operation. Such an increase in thickness would increase the working gap between the stator and the rotor. This, in turn, would reduce substantially the performance of the motor in terms of power output and control.

FR 2415905 A (ETAT FRANCAIS), figure 1, discloses an electric motor driven hydraulic pump, wherein a sleeve (4) is supported by an external stator (2). An annular component (5) is provided at the open end of the sleeve to support a section of the sleeve that is not supported by the surface of the stator.

According to our invention, in an electric motor driven hydraulic pump in which an internal rotor is rotatable relative to an external stator, a non-magnetic sleeve is provided for sealing a chamber in which the rotor is located, the non-magnetic sleeve being so constructed and arranged that when subjected to pressure within the chamber the sleeve is adapted to define a sleeve member which is substantially integral with the stator.

This enables us to incorporate the sleeve for hydraulically sealing the pump and the motor assembly that does not cause a reduction in the performance of motor in as much as the wall thickness of the sleeve is substantially the same as that of a sleeve defining barrier in a conventional pump for generating significantly lower pressures.

The sleeve, when deformed, acts hydraulically to seal the rotor chamber but utilises the stator itself as a support against further deformation as a result of increased hydraulic pressure. This allows the sleeve to be made of a sufficiently thin section such that it occupies only a small space between the stator and the rotor and therefore little or substantially no degradation in the performance that the motor is produced.

An over-moulding is provided at the open end of the sleeve to act likewise to support any section of the sleeve which is not otherwise supported by the surface of the stator.

The over-moulding is provided as an integral part of the a housing of the pump.

The sleeve comprises a can of cup-shaped outline closed at one end by an end wall which may be of substantially thicker section than the remaining of the sleeve and in order to strengthen the sleeve itself since the end wall does not form part of the working air gap of the motor.

Such a construction of sleeve is relatively easy to produce as the sleeve can be manufactured, for example by deep drawing of a stainless steel blank.

Two embodiments of our invention are illustrated in the accompanying drawings in which:-
**Figure 1** is an end elevation of an electrical motor driven hydraulic pump;
**Figure 2** is a section on the line 2-2 of figure 1;
**Figure 2a** is a section on an enlarged scale of a connection between the sleeve and the pump housing;
**Figure 2b** is a view similar to Figure 2a but showing a modification;
**Figure 2c** is yet another view similar to Figure 2a but showing a further modification;
**Figure 3** is a perspective view of the pump with part of the casing removed for clarity;
Figure 4 illustrates two sub-assemblies comprising the pump/rotor assembly and the electronic stator assembly;
Figure 5 is an exploded view of part of Figure 4;
Figure 6 is an exploded view of a second embodiment; and
Figure 7 is a cut-away version of the pump illustrated in Figure 6.

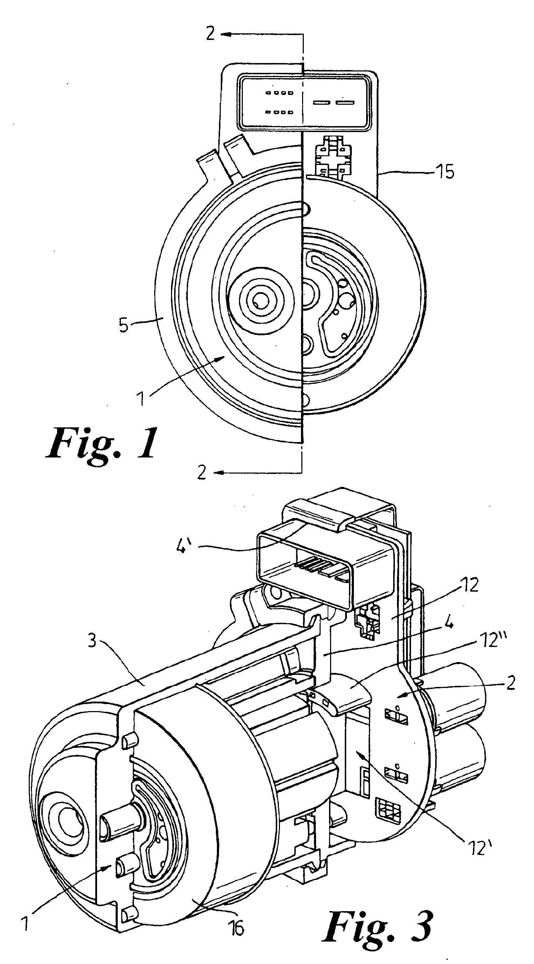

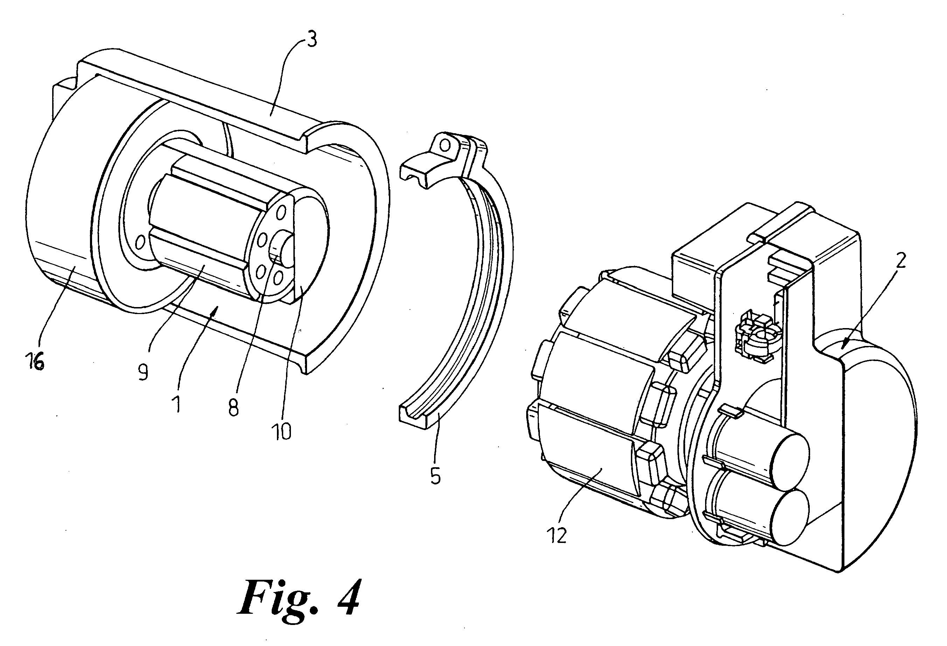

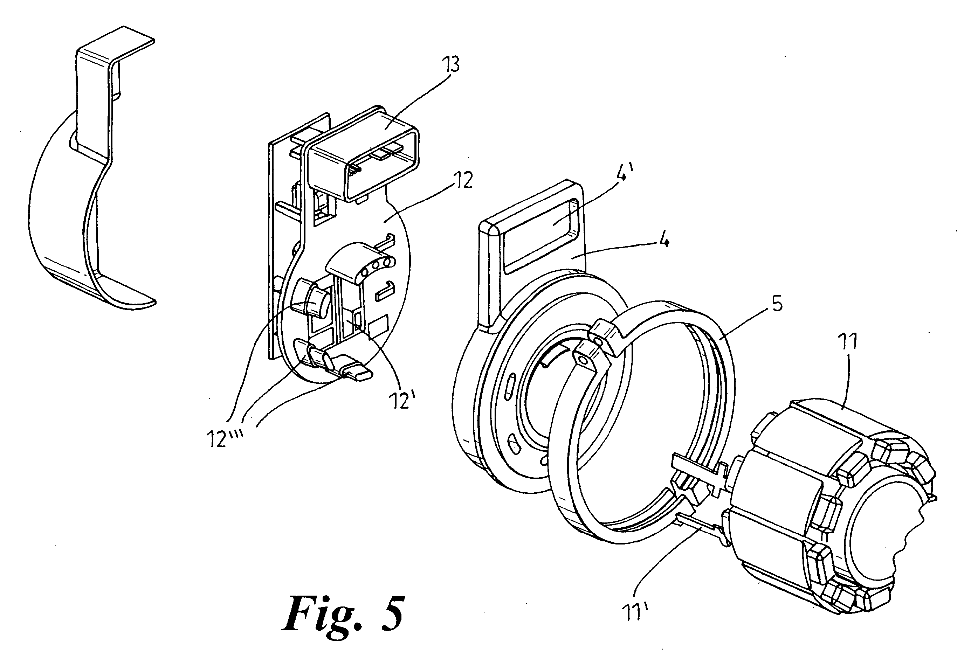

The electric motor driven hydraulic pump illustrated in Figure 1-5 of the accompanying drawings comprises two sub-assemblies 1 and 2. A first of the two sub-assemblies is associated with a casting 3 of cup-shaped outline and the second with a support frame 4 which are clamped together at adjacent ends by a circumferentially extending clamping band 5. The casting 3 defines a housing for the rotor of an electric motor 6 and a pump impeller 7. As illustrated the impeller 7 is driven by a drive shaft 8 driven by the rotor 9 of the motor and which is enclosed within a stainless steel can 10 which the stator 11 surrounds. The can is preferably manufactured from a non-magnetic material preferably stainless steel.

The open end of the casting 3 is closed by the support frame 4 by the clamping action of the band 5 as described above. The support frame is of die cast construction and defines a mounting for a lead frame 12, the support frame 4 and the lead frame 12 include connecting paths from the motor to the electronics for controlling operation of motor 6. The lead frame provides a mounting for a circuit board 14 and also includes a connector 13. The lead frame 12 also includes a moulded bare die FET module indicated at 12' and integrally moulded portions 12" housing a hall effect sensor. The lead frame has additional mouldings 12'" each having an opening through which respective connectors 11' from the motor stator can pass to be joined with the FET leads. The lead frame and electronics are enclosed within an end cover 15.

The sub-assembly 1 is built by inserting a further assembly comprising the pump impeller 7 and associated components, the shaft 8, the rotor 9, the pump housing 16 and the can 10. The further assembly being located within the housing 3 and then being secured with a circlip. The completed sub-assembly 1 then forms a stand alone sealed unit in which all the elements of the pump can be hydraulically tested prior to final assembly with the electronics.

The sub-assembly 2 is assembled by mounting the board 14 carrying the electronics on the lead frame 12 and then locating the connector 13 of the lead frame through the opening 4' in the support frame 4. Once mounted in this position the bare die FET module is exposed on the side of the lead frame adjacent the support member 4 such as to abut the spigot 4" on the support member 4. A thermal compound may be applied between the abutting surfaces.

The stator connectors 11' are inserted through respective openings in the support frame 4 and the lead frame 12 to be joined with the FET leads in known manner. The support frame 4 is configured to support the stator 11 in its final position on sub-assembly 2.

The final part of sub-assembly 2 is to mount the cover 15 in place by way of a snap fit connection with the edge of the lead frame 12. The completed sub-assembly 2 then forms a stand alone unit in which the electronics and stator can be tested prior to final assembly with the pump assembly.

As the sub-assemblies 1 and 2 are brought together, the stator 11 of assembly 2 is assembled such as to surround the can 10 of assembly 1. Finally, the assembly is completed by securing the clamping band 5 in position to clamp mating faces of the casting 3 and the lead frame 2 into engagement. In this final position, it is notable that the bare die FET module on the lead frame 12 is in contact with the support frame 4 as described above, which serves to help dissipate heat.

The construction described above has the advantage that each of the two sub-assemblies 1 and 2 can be manufactured separately, and tested individually. Each of the two sub-assemblies 1 and 2 can be manufactured at different locations and then both supplied to the customer for final assembly, for example on a vehicle during production. The two sub-assemblies can simply be assembled together and then clamped with mating faces in engagement as described above.

In the construction described above the sleeve 10 comprises a can of cup-shaped outline constructed from stainless steel. It comprises a cylindrical wall 20 which is closed at its outer end by an end wall 21. A rim at the open edge of the cylindrical wall 20 is fixedly secured in an annular groove 19 in the pump housing 16.

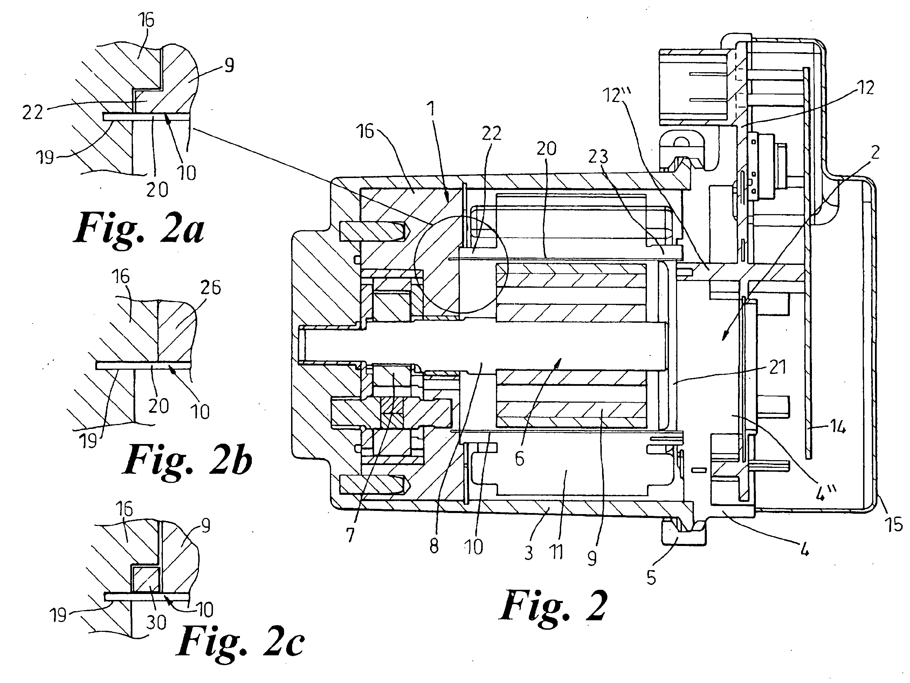

A major part of the axial length of the cylindrical wall 20 is supported by the inner radial surface of the stator 11. To ensure that the total length is supported, and in particular the gap between the stator and the housing 16, over-mouldings 22 and 23 are provided on the stator to support both ends of the can 10 (see Figure 2a).

The end wall 21 is thickened in section to strengthen that end. This can be achieved without increasing the thickness of the cylindrical wall, which otherwise would lower the performance of the pump.

In operation the cylindrical wall 20 of the can 10 when subjected to an internal pressure in the order of 200 bar deforms until the presence of the stator 9 and the over-mouldings 22 and 23 act jointly as supports against further deformation.

The can 10 can be made from a deep drawing operation of a stainless steel blank.

In the construction illustrated in Figure 2b of the accompanying drawings the free end of the cylindrical wall 20 is supported by an extension 26 of the pump housing 16, suitably over-moulded.

In another construction shown in Figure 2c an annular packing ring 30 is arranged to support the portion of the cylindrical wall 20 in the gap between the pump housing 16 and the stator 9.

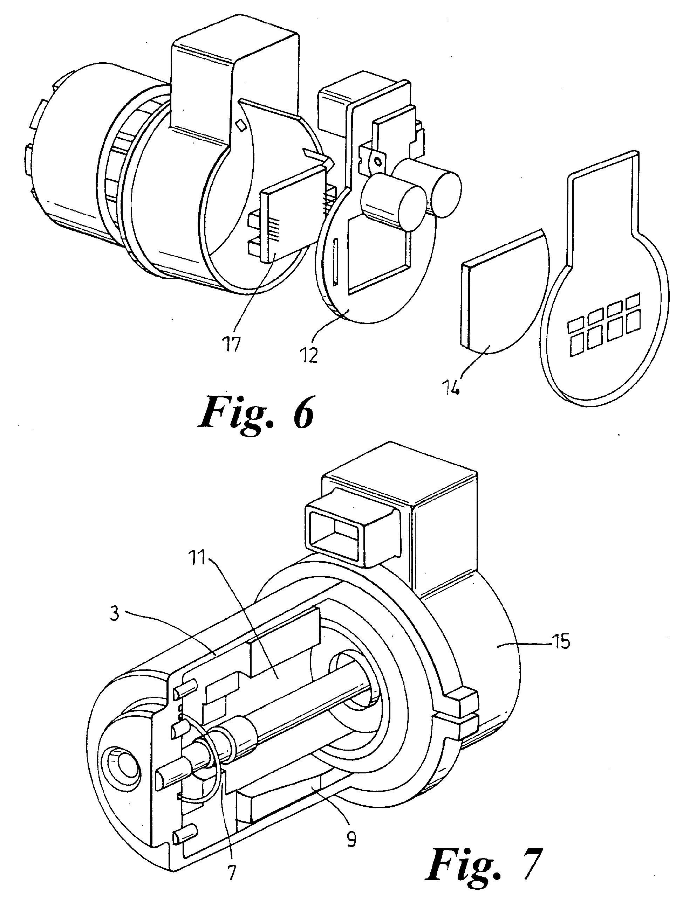

In the modified construction illustrated in Figures 6 and 7 the position of the circuit board 14 and the mounting lead frame 12 are the same as for the embodiments Figure 1-5, but a separate FET module 17 is used.

It will be appreciated that whilst the sub-assembly 1 can be fully tested for hydraulic integrity in order to test the rotor 9 a slave stator locked to a suitable power source may be employed.

## Claims

1. An electric motor driven hydraulic pump (1,2) comprising a housing (3), an internal rotor (9) which is supported relative to the housing (3), a non-magnetic sleeve 10 for sealing a chamber in which the rotor (9) is located, the sleeve (10) comprising a can of cup-shaped outline closed at one end by an end wall which is substantially thicker in section than the remainder of the sleeve (10), and an external stator (11) which is supported by a support frame (4), the pump being so constructed and arranged that the housing (3) is fixed to the support frame (4) such that the stator (11) surrounds the can with the rotor (9) being rotatable relative to the external stator (11), and further in which the non-magnetic sleeve (10) is so constructed and arranged that when subjected to pressure within the chamber the sleeve is substantially integral with the stator (11) such that the stator provides support against further deformation as a result of increased hydraulic pressure, **characterised in that**:
the pump comprises two sub-assemblies (1,2) which are separable, a first of the two sub assemblies comprising the housing (3), a pump housing (16), the internal rotor (9) and the non-magnetic sleeve (10), a second of the two sub assemblies comprising the external stator (11) and the support frame (4) and further in which an over-moulding is provided at the open end of the sleeve to act to support a section of the sleeve (10) that is not otherwise supported by the surface of the stator, the over-moulding being an integral part of the pump housing (16) of the first sub-assembly.

2. An electric motor driven hydraulic pump according to claim 1 in which the over-moulding comprises an annular ring provided to support any otherwise unsupported section.

3. An electric motor drive hydraulic pump according to any preceding claim in which the sleeve comprises a deep drawing of a stainless steel blank.

## Patentansprüche

1. Eine elektromotorisch angetriebene Hydraulikpumpe (1, 2), umfassend ein Gehäuse (3), einen internen Rotor (9), der relativ zum Gehäuse (3) getragen wird, eine nicht magnetische Hülle (10) zur Abdichtung einer Kammer, in der sich der Rotor (9) befindet, wobei die Hülle (10) eine Dose mit einem becherförmigen Umriss umfasst, die an einem Ende durch eine Stirnwand abgeschlossen ist, welche im Querschnitt wesentlich dicker ist als die übrige Hülle (10), sowie einen externen Ständer (11), der von einem Stützrahmen (4), getragen wird, wobei die Pumpe so konstruiert und angeordnet ist, dass das Gehäuse (3) am Stützrahmen (4) befestigt ist, sodass der Ständer (11) die Dose mit dem Rotor (9), welcher relativ zum externen Ständer (11) rotierbar ist, umgibt, und worin ferner die nicht magnetische Hülle (10) so konstruiert und angeordnet ist, dass sie, wenn sie einem Druck innerhalb der Kammer ausgesetzt ist, im Wesentlichen einstückig mit dem Ständer (11) ausgebildet ist, sodass der Ständer eine Stütze gegen eine weitere Verformung infolge eines erhöhten hydraulischen Drucks bereitstellt, **dadurch gekennzeichnet:**
**dass** die Pumpe zwei Unterbaugruppen (1, 2) umfasst, die trennbar sind, wobei eine erste der beiden Unterbaugruppen das Gehäuse (3), ein Pumpengehäuse (16), den internen Rotor (9) und die nicht magnetische Hülle (10) umfasst, eine zweite der beiden Unterbaugruppen den externen Ständer (11) und den Stützrahmen (4) umfasst, und worin ferner eine Überformung am offenen Ende der Hülle bereitgestellt wird, um als Abstützung eines Abschnitts der Hülle (10) zu dienen, der nicht auf andere Weise von der Oberfläche des Ständers getragen wird, wobei die Überformung einstückig mit dem Pumpengehäuse (16) der ersten Unterbaugruppe ausgebildet ist.

2. Eine elektromotorisch angetriebene Hydraulikpumpe gemäß Anspruch 1, in der die Überformung einen Sprengring umfasst, der bereitgestellt wird, um jeden ansonsten nicht unterstützten Abschnitt abzustützen.

3. Eine elektromotorisch angetriebene Hydraulikpumpe gemäß irgendeinem vorhergehenden Anspruch, in der die Hülle ein Tiefziehen eines Edelstahl-Rohlings umfasst.

## Revendications

1. Une pompe hydraulique entraînée par un moteur électrique (1, 2) comprenant un logement (3), un rotor interne (9) qui est soutenu par rapport au logement (3), un manchon non magnétique (10) destiné à sceller une chambre dans laquelle le rotor (9) est situé, le manchon (10) comprenant une boîte d'un contour en forme de coupelle fermée à une extrémité par une paroi d'extrémité qui est sensiblement plus épaisse en section que le reste du manchon (10), et un stator externe (11) qui est soutenu par une armature de support (4), la pompe étant construite et agencée de sorte que le logement (3) soit fixé à l'armature de support (4) de sorte que le stator (11) entoure la boîte avec le rotor (9) étant pivotable par rapport au stator externe (11), et en outre dans lequel le manchon non magnétique (10) est construit et agencé de sorte que, lorsqu'il est soumis à une pression à l'intérieur de la chambre, le manchon est sensiblement d'un seul tenant avec le stator (11) de sorte que le stator (11) fournisse un support contre une déformation complémentaire en conséquence d'une pression hydraulique accrue, **caractérisée en ce que** :
la pompe comprend deux sous-ensembles (1, 2) qui sont séparables, un premier des deux sous-ensembles comprenant le logement (3), un logement de pompe (16), le rotor interne (9) et le manchon non magnétique (10), un deuxième des deux sous-ensembles comprenant le stator externe (11) et l'armature de support (4) et en outre dans lequel un surmoulage est fourni au niveau de l'extrémité ouverte du manchon de façon à agir en vue de soutenir une section du manchon (10) qui n'est pas soutenue par ailleurs par la surface du stator, le surmoulage étant une partie d'un seul tenant du logement de pompe (16) du premier sous-ensemble.

2. Une pompe hydraulique entraînée par un moteur électrique selon la Revendication 1 dans laquelle le surmoulage comprend une bague annulaire fournie de façon à soutenir toute partie non soutenue par ailleurs.

3. Une pompe hydraulique entraînée par un moteur électrique selon l'une quelconque des Revendications précédentes dans laquelle le manchon comprend un emboutissage profond d'une ébauche en acier inoxydable.
